# FASCICULE DE BREVET EUROPEEN

(11) **EP 3 052 372 B1**
(45) Date de publication et mention de la délivrance du brevet: **17.04.2019**
(21) Numéro de dépôt: 14793226.3
(22) Date de dépôt: 26.09.2014
(51) Int. Cl.: F16B 5/02, B60R 9/04

(54) **DISPOSITIF DE RATTRAPAGE DE JEU ENTRE DEUX PLAQUES**
VORRICHTUNG ZUR EINSTELLUNG DES SPIELRAUMS ZWISCHEN ZWEI PLATTEN
DEVICE FOR ADJUSTING THE PLAY BETWEEN TWO PLATES

(30) Priorité: 02.10.2013 FR 1359524
(43) Date de publication de la demande: 10.08.2016
(73) Titulaire: Renault s.a.s, 92100 Boulogne-Billancourt (FR)
(72) Inventeur: JEGARD, Loic, 78370 Plaisir (FR)
(86) Numéro de dépôt international: PCT/FR2014/052431
(87) Numéro de publication internationale: WO 2015/049442

(56) Documents cités:
- EP-A1- 2 174 836
- EP-A2- 2 532 568
- DE-A1- 3 932 193
- DE-A1- 19 910 510

## Description

### Domaine technique de l'invention

L'invention concerne un agencement pour véhicule automobile, comprenant une première plaque d'un premier élément de structure de la caisse du véhicule, notamment un renfort de montant de baie, et une deuxième plaque d'un deuxième élément de structure de la caisse du véhicule, notamment un pavillon soudé au reste de la caisse.

L'invention a pour objet également un véhicule automobile muni d'au moins un tel agencement.

### État de la technique

La fixation d'une barre de toit de véhicule automobile, notamment une barre de toit orientée dans la direction longitudinale du véhicule, sur un pavillon du véhicule automobile est problématique en raison des efforts verticaux transmis au pavillon nécessaires à la fonction de fixation de la barre de toit. En effet, il arrive fréquemment que le véhicule ne soit pas équipé d'élément de contre-réaction à la poussée de la barre de toit vers le pavillon. Même lorsqu'un tel élément de contre-réaction est prévu, par exemple sous la forme d'une entretoise disposée entre le pavillon et un autre élément de la structure de caisse et tel que durant la fixation, il transmet au pavillon des efforts dirigés dans un sens opposé audit autre élément de la structure de caisse et s'opposant directement aux efforts verticaux de fixation de la barre de toit. Cet élément de contre-réaction présente une longueur non réglable.

Il en résulte une difficulté voire une impossibilité à gérer la dispersion de la position verticale du pavillon, notamment dans le cas d'un pavillon soudé et brasé au reste de la caisse du véhicule. En effet, dans le cas d'un pavillon soudé et brasé, la position spatiale occupée par le pavillon est variable d'un véhicule à l'autre. Cela engendre aussi des problèmes de qualité perçue en raison d'un effet de cloquage du pavillon et des problèmes d'étanchéité à l'eau.

Ces problématiques ne sont actuellement pas résolues et imposent souvent une obligation de déroger au cahier des charges relatif à l'étanchéité à l'eau pour un pavillon de véhicule automobile.

Pour tenter de répondre à ces problématiques, il a déjà été imaginé d'utiliser un élément de contre-réaction à la poussée, agissant à la manière d'une entretoise disposée entre le pavillon et le renfort de montant de baie, mettant en oeuvre un pontet collé au renfort de montant de baie du mastic entre le pontet et le pavillon. Mais cette solution ne donne pas satisfaction en raison d'une surface de collage trop encombrante et d'un respect du cahier des charges en tenue incertain.

Une autre solution a déjà été imaginée utilisant un élément de contre-réaction à la poussée mettant en oeuvre un écrou à rattrapage de jeu. Toutefois, la mise en place de cette solution est très contraignante et nécessite la mise en place de protections pour les opérations de cataphorèse subies par la caisse du véhicule automobile. Le document EP 2 532 568 A2 décrit un agencement selon le préambule de la revendication 1.

Bien que ces problématiques concernent particulièrement le domaine de la fixation d'une barre de toit sur un pavillon, lui-même tenu à distance d'un renfort de montant de baie, elles peuvent être étendues à toutes autres sortes de plaques appartenant à deux éléments de structure de la caisse du véhicule distincts et à la fixation de tout objet sur ces plaques.

### Objet de l'invention

Le but de la présente invention est de proposer un agencement pour véhicule automobile qui remédie aux inconvénients listés ci-dessus.

Notamment, un objet de l'invention est de fournir un tel agencement qui soit simple, économique, convivial, garantissant une bonne tenue de l'objet sur les plaques et la fourniture d'efforts de contre-réaction opposés aux efforts de fixation de l'objet.

Un autre objet est de fournir un tel agencement qui confère une bonne étanchéité à l'eau, notamment dans le cas où l'une des plaques est solidaire du pavillon de véhicule automobile et où l'objet à fixer sur le pavillon est une barre de toit.

Un autre objet est de fournir un tel agencement qui évite tout risque de désagréments esthétiques liés à la fixation de l'objet, notamment les effets de cloquage du pavillon sur lequel la barre de toit est fixée.

Enfin, un autre objet est de fournir un tel agencement qui permette de rattraper des jeux verticaux entre les plaques, afin notamment de compenser la dispersion de la position verticale du pavillon, notamment dans le cas d'un pavillon soudé et brasé au reste de la caisse du véhicule.

Ces objets peuvent être atteints grâce à un agencement pour véhicule automobile, comprenant une première plaque d'un premier élément de structure de la caisse du véhicule, notamment un renfort de montant de baie, et une deuxième plaque d'un deuxième élément de structure de la caisse du véhicule, notamment un pavillon soudé au reste de la caisse, qui comprend un dispositif de serrage et de rattrapage de jeu entre les première et deuxième plaques, constitué par un premier organe fileté notamment de type femelle monté solidaire de la première plaque et par un deuxième organe fileté notamment de type mâle vissé dans ledit premier organe fileté, les première et deuxième plaques étant maintenues par le dispositif de serrage à distance l'une de l'autre suivant la direction de vissage des premier et deuxième organes filetés entre eux de sorte à délimiter entre elles un intervalle dans lequel sont disposés les premier et deuxième organes filetés, ledit deuxième organe fileté étant muni d'une tête d'appui exerçant sur la deuxième plaque un premier effort tendant à rapprocher la deuxième plaque de la première plaque suivant ladite direction de vissage de sorte que la valeur dudit intervalle et l'intensité dudit premier effort sont ajustées en fonction de la position relative des premier et deuxième organes filetés.

Préférentiellement, l'agencement comprend un objet à fixer sur la deuxième plaque du côté opposé à la première plaque, notamment une barre de toit, et un dispositif de fixation enserrant ledit objet, les première et deuxième plaques et le dispositif de serrage de sorte à exercer un deuxième effort sur ledit objet en direction de la deuxième plaque, le dispositif de serrage permettant que la valeur de l'intervalle soit constante indépendamment de l'intensité dudit deuxième effort.

Le dispositif de fixation peut comprendre un boulon ayant un écrou et une vis dont la position relative modifiée par vissage de l'écrou par rapport à la vis ajuste l'intensité dudit deuxième effort et les premier et deuxième organes filetés peuvent comprendre respectivement des premier et deuxième passages autorisant au moins une partie dudit boulon à traverser le dispositif de serrage suivant ladite direction de vissage.

De préférence, la vis comprend une tête exerçant ledit deuxième effort sur l'objet à fixer et l'écrou est disposé du côté opposé à la deuxième plaque par rapport à la première plaque et exerce sur le premier organe fileté un troisième effort opposé audit deuxième effort.

Le deuxième passage délimité par le deuxième organe fileté peut notamment être un alésage cylindrique dirigé suivant ladite direction de vissage, de sorte que le deuxième organe fileté présente une forme générale de fût à l'extrémité duquel la tête d'appui est formée par une collerette radiale en saillie du reste du fût.

Le deuxième élément de structure de caisse est de préférence un pavillon du véhicule automobile, notamment soudé et brasé au reste de la caisse, et l'objet à fixer est une barre de toit.

L'agencement peut comprendre un moyen d'entretoisement entre les première et deuxième plaques, disposé dans ledit intervalle, et exerçant sur la deuxième plaque un quatrième effort opposé au premier effort exercé par la tête d'appui du deuxième organe fileté sur la deuxième plaque.

Le moyen d'entretoisement peut comprendre un pontet fixé sur une face de la première plaque tournée vers la deuxième plaque et une pièce formée dans un matériau expansif par apport de chaleur, notamment durant une opération de cataphorèse appliquée aux premier et deuxième éléments de structure, ladite pièce étant disposée entre le pontet et la deuxième plaque et étant en contact contre la deuxième plaque.

Le première organe fileté est constitué par un écrou serti ou soudé à la première plaque ou par un écrou-cage fixé à la première plaque ou par un écrou-cage fixé à la première plaque.

La tête d'appui du deuxième organe fileté est de préférence disposée du côté opposé à la première plaque par rapport à la deuxième plaque suivant ladite direction de vissage.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 représente un exemple d'agencement selon l'invention en coupe longitudinale-verticale,
- la figure 2 représente l'agencement de la figure 1 en coupe transversale-verticale.

### Description de modes préférentiels de l'invention

La description qui va suivre est faite en référence à un repère orthonormé (X, Y, Z) associé classiquement à un véhicule automobile, dans lequel X est la direction longitudinale horizontale avant-arrière du véhicule, Y est la direction transversale droite-gauche qui est horizontale et perpendiculaire à X, et Z est la direction verticale conjointement perpendiculaire aux directions X et Y. Ces directions peuvent être considérées comme liées à la caisse du véhicule.

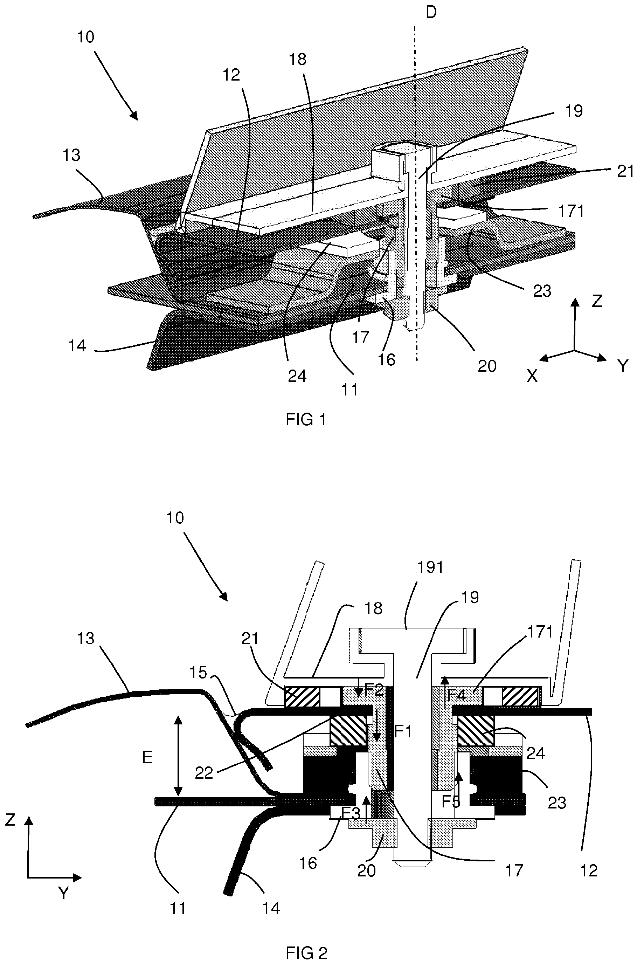

Les figures 1 et 2 représentent un agencement 10 pour véhicule automobile, comprenant une première plaque 11 et une deuxième plaque 12. La première plaque 11 vient notamment de matière d'un premier élément de structure de la caisse du véhicule. Le premier élément de structure de la caisse est notamment mais non limitativement constitué par un renfort de montant de baie. La deuxième plaque 12 vient notamment de matière d'un deuxième élément de structure de la caisse du véhicule. Le deuxième élément de structure de la caisse du véhicule est notamment mais non exclusivement constitué par un pavillon de véhicule automobile. Il s'agit notamment d'un pavillon soudé et brasé au reste de la caisse, de sorte qu'il est susceptible de présenter une grande dispersion de la position du pavillon et donc de la deuxième plaque 12 suivant la direction Z par rapport au renfort de montant de baie et donc par rapport à la première plaque 11, variant d'un véhicule à l'autre pour un même modèle donné et variant également d'un modèle de véhicule à l'autre.

L'agencement 10 comprend des moyens détaillés plus loin qui permette de rattraper des jeux verticaux entre les plaques 11, 12, afin de compenser cette dispersion, notamment dans le cas d'un pavillon soudé et brasé au reste de la caisse du véhicule.

Bien que la solution soit décrite en application à des plaques 11, 12 respectivement solidaires d'un renfort de montant de baie et d'un pavillon soudé, elle peut en pratique être appliquée à toutes plaques quelle que soit la nature des premier et deuxième éléments de structure de la caisse.

L'agencement 10 comprend également, dans cet exemple particulier, un côté de caisse 13 et une doublure de montant de baie 14. Le cordon de soudure entre le côté de caisse et le pavillon est représenté et porte la référence 15.

L'agencement 10 comprend avantageusement un dispositif de serrage des première et deuxième plaques 11, 12 et de rattrapage de jeu entre les première et deuxième plaques 11, 12. Ce dispositif est constitué par un premier organe fileté 16, notamment de type femelle, monté solidaire de la première plaque 11 et par un deuxième organe fileté 17, notamment de type mâle, vissé dans ledit premier organe fileté 16. La direction de vissage des premier et deuxième organes filetés 16, 17 entre eux est repérée D (figure 1). Les première et deuxième plaques 11, 12 sont maintenues à distance l'une de l'autre suivant la direction de vissage D par le dispositif de serrage de sorte à délimiter entre elles un intervalle E (figure 2) dans lequel sont disposés les premier et deuxième organes filetés 16, 17. Le deuxième organe fileté 17 est muni d'une tête d'appui 171 exerçant sur la deuxième plaque 12 un premier effort F1 tendant à rapprocher la deuxième plaque 12 de la première plaque 11 suivant la direction de vissage D de sorte que la valeur de l'intervalle E et l'intensité du premier effort F1 sont ajustées en fonction de la position relative des premier et deuxième organes filetés 16, 17.

Préférentiellement, la tête d'appui 171 du deuxième organe fileté 17 est disposée du côté opposé à la première plaque 11 par rapport à la deuxième plaque 12 suivant la direction de vissage D.

La direction de vissage D est notamment orientée sensiblement selon la direction Z. En vissant le deuxième organe fileté 17 par rapport au premier organe fileté 16, la position relative de ces deux organes filetés varie le long de la direction de vissage D. Au cours du vissage, la tête d'appui 171 vient en contact de la deuxième plaque 12. Une fois ce contact établi, il est possible de prolonger le vissage et cette opération permet de régler l'intensité du premier effort F1 ainsi que la valeur de E, ce qui correspond à la distance séparant les plaques 11, 12 suivant la direction D. Il sera précisé plus loin que l'application de l'effort F1 et l'ajustement de E se pratiquent en opposition directe d'efforts opposés provenant de moyens d'entretoisement disposés entre les deux plaques 11, 12 et ayant tendance à éloigner la deuxième plaque de la première plaque ou réciproquement. Il est possible de rattraper les jeux verticaux entre les deux plaques 11, 12, permettant de compenser la disparité de positionnement de la deuxième plaque 12 par rapport à la première plaque 11. Ceci est particulièrement avantageux dans le cas particulier où la deuxième plaque 12 fait partie intégrante d'un pavillon de véhicule automobile, en particulier un pavillon soudé et brasé au reste de la caisse.

L'agencement 10 comprend également un objet 18 à fixer sur la deuxième plaque 12 du côté opposé à la première plaque 11. Il s'agit notamment d'une barre de toit, comme par exemple une barre de toit longitudinale globalement orientée suivant la direction X. La solution décrite ici a pour avantage de faciliter et de fiabiliser la fixation 18 sur les deux plaques 11, 12.

L'agencement 10 comprend aussi un dispositif de fixation enserrant l'objet 18, les première et deuxième plaques 11, 12 et le dispositif de serrage suivant la direction de vissage D, de sorte à exercer un deuxième effort F2 sur l'objet 18 en direction de la deuxième plaque 12. Lorsqu'un tel deuxième effort F2 est appliqué, le dispositif de serrage constitué par les deux organes filetés 16, 17 dont la position relative a été préalablement ajustée, permet que la valeur de l'intervalle E entre les deux plaques 11, 12 soit constante indépendamment de l'intensité du deuxième effort F2.

Un joint d'étanchéité 21 à l'eau est préférentiellement interposé entre l'objet 18 et la deuxième plaque 12. Il se trouve comprimé sous l'effet du deuxième effort F2 : il est enserré entre l'objet 18 et la deuxième plaque 12 selon la direction de vissage D de sorte à assurer l'étanchéité à l'eau du côté de l'objet 18 à travers la lumière ménagée dans la deuxième plaque 12 pour le montage du deuxième organe fileté 17 à travers la deuxième plaque 12. Par exemple, le joint d'étanchéité 21 adopte une forme de couronne disposée autour de la tête d'appui 171.

En parallèle, une rondelle anticorrosion 22 est préférentiellement disposée, suivant la direction Z, entre la tête d'appui 171 du deuxième organe fileté 17 et la deuxième plaque 12. Cette rondelle anticorrosion 22 est comprimée sous l'effet du premier effort F1 : elle est enserrée entre la tête d'appui 171 et la deuxième plaque 12 selon la direction de vissage D en périphérie de la lumière ménagée dans la deuxième plaque 12 pour le passage du deuxième organe fileté 17 à travers la deuxième plaque 12.

La première plaque 11 comprend également une lumière disposée en regard de la lumière de la deuxième plaque 12 suivant la direction de vissage D et permettant le montage à travers la première plaque 11 de tout ou partie du premier organe fileté 16 et/ou de tout ou partie du deuxième organe fileté 17.

Préférentiellement, le dispositif de fixation comprend un boulon ayant un écrou 20 et une vis 19 vissés l'un dans l'autre. La position relative de l'écrou 20 et de la vis 19 modifiée par l'action de vissage de l'écrou 20 par rapport à la vis 19 ou réciproquement ajuste l'intensité du deuxième effort F2. Les premier et deuxième organes filetés 16, 17 comprennent respectivement des premier et deuxième passages autorisant au moins une partie de ce boulon à traverser le dispositif de serrage suivant la direction de vissage D.

Dans un mode de réalisation tel qu'illustré, la vis 19 comprend une tête 191 exerçant le deuxième effort F2 sur l'objet 18 à fixer et l'écrou 20 est disposé du côté opposé à la deuxième plaque 12 par rapport à la première plaque 11 et exerce sur le premier organe fileté 16 un troisième effort F3 opposé au deuxième effort F2.

Dans un autre mode de réalisation non illustré prévoyant un montage inversé du boulon, l'écrou 20 exerce le deuxième effort F2 sur l'objet 18 à fixer et la vis 19 comprend une tête disposée du côté opposé à la deuxième plaque 12 par rapport à la première plaque 11 et exerçant le troisième effort F3 sur le premier organe fileté 16.

Dans le mode de réalisation illustré, le deuxième passage délimité par le deuxième organe fileté 17 est un alésage cylindrique dirigé suivant la direction de vissage D, de sorte que le deuxième organe fileté 17 présente une forme générale de fût à l'extrémité duquel la tête d'appui 171 est formée par une collerette radiale en saillie du reste du fût. Le fût s'étend suivant la direction de vissage D et sa surface extérieure, du côté opposé à la tête d'appui 171 suivant la direction D, est muni d'un filetage externe venant en prise avec un filetage interne formé dans un alésage cylindrique pratiqué dans le premier organe fileté 16 suivant la direction de vissage D et qui constitue le premier passage évoqué précédemment. Ainsi, la vis 19 traverse, en partant de sa tête 191, d'une part le deuxième passage formé dans le deuxième organe fileté 17 puis d'autre part le premier passage formé dans le premier organe fileté 16. La collerette radiale s'étend à partir du fût notamment dans un plan perpendiculaire à la direction de vissage D de sorte à former un épaulement au niveau duquel le premier effort F1 est transmis à la première plaque 11, éventuellement avec interposition de la rondelle anticorrosion 22.

Comme indiqué précédemment, le deuxième élément de structure de caisse est avantageusement mais non exclusivement un pavillon du véhicule automobile. Il s'agit notamment d'un pavillon soudé et brasé au reste de la caisse. D'autre part, l'objet 18 à fixer peut être une barre de toit à fixer au pavillon.

Une fois que l'intervalle E est ajusté de même que l'intensité du premier effort F1 par la mise en oeuvre de l'ajustement de la position relative des premier et deuxième organes filetés 16, 17, la vis 19 et l'écrou 20 sont mis en place de part et d'autre des premier et deuxième organes filetés 16, 17 suivant la direction de vissage D et sont vissés l'un dans l'autre jusqu'à l'application du deuxième effort F2 sur l'objet 18 et du troisième effort F3 sur le premier organe fileté 16. Par cette action, l'objet 18 est fixé à l'ensemble constitué par les plaques 11, 12 et les premier et deuxième organes filetés 16, 17.

Comme indiqué précédemment, l'agencement 10 peut comprendre un moyen d'entretoisement entre les première et deuxième plaques 11, 12, disposé dans l'intervalle E et exerçant sur la deuxième plaque 12 un quatrième effort F4 opposé au premier effort F1 exercé par la tête d'appui 171 du deuxième organe fileté 17 sur la deuxième plaque 12.

Préférentiellement, le moyen d'entretoisement comprend un pontet 23 fixé sur une face de la première plaque 11 tournée vers la deuxième plaque 12 et une pièce 24 formée dans un matériau expansif par apport de chaleur, notamment durant une opération de cataphorèse appliquée aux premier et deuxième éléments de structure. La pièce 24 est disposée entre le pontet 23 et la deuxième plaque 12 et est en contact contre la deuxième plaque 12 lorsque ledit apport de chaleur a été réalisé.

La figure 1 illustre la situation avant cataphorèse, avant ledit apport de chaleur et donc avant expansion de la pièce 24 en direction de la deuxième plaque 12 et avant la mise en contact entre la pièce 24 et la deuxième plaque 12 en conséquence de cette expansion. Par contre, la figure 2 représente la situation après l'opération de cataphorèse : grâce à l'apport de chaleur, la pièce 24 a subi un phénomène d'expansion à la suite duquel la pièce 24 est en contact avec la deuxième plaque 12. Dans cette situation, le pontet 23 et la pièce 24 constituent bien un moyen d'entretoisement entre les plaques 11, 12, s'opposant à l'action du dispositif de serrage et de rattrapage de jeux constitué par les deux organes filetés 16, 17.

Préférentiellement pour la simplicité de mise en oeuvre et de conception, le première organe fileté 16 est constitué par un écrou serti ou soudé à la première plaque 11 ou par un écrou-cage fixé à la première plaque 11. L'écrou serti ou soudé est notamment monté et fixé dans la lumière formée dans la première plaque 11. Pour le montage d'un tel écrou-cage, l'interface de montage avec la première plaque 11 pourra notamment se présenter sous la forme d'une encoche.

L'invention concerne aussi un véhicule automobile comprenant au moins un tel agencement 10.

Les efforts appliqués par le dispositif de fixation 19, 20 à l'ensemble comprenant l'objet 18, le dispositif de serrage 16, 17 et les première et deuxième plaques 11, 12, c'est-à-dire le deuxième effort F2 et le troisième effort F3, sont intégralement encaissés par le dispositif de serrage 16, 17 et pas par les première et deuxième plaques 11, 12. Les première et deuxième plaques 11, 12 ne subissent que les efforts de serrage appliqués par le dispositif de serrage, c'est-à-dire le premier effort F1 appliqué à la deuxième plaque 12 par la tête d'appui 171 et l'effort F5 opposé au premier effort F1 et qui est appliqué à la première plaque 11 par le premier organe fileté 16. Autrement dit, l'intensité du premier effort F1 est totalement décolérée de l'intensité du deuxième effort F2. De même, l'intensité de l'effort F5 appliqué par le premier organe fileté 16 à la première plaque 11 est totalement décolérée de l'intensité du troisième effort F3. C'est la raison pour laquelle la valeur de l'intervalle E entre les deux plaques 11, 12 est maintenue constante grâce au dispositif de serrage 16, 17 qui joue un rôle d'entretoise vis-à-vis des efforts F2, F3 appliqués par le dispositif de fixation 19, 20, indépendamment de l'intensité des efforts de serrage F1, F5 appliqués par le dispositif de fixation 19, 20. Par contre, la valeur de l'intervalle E est réglée grâce à l'ajustement de la position relative des premier et deuxième organes filetés 16, 17 suivant la direction de vissage D.

L'ordre de montage peut être le suivant : dans un premier temps, le pontet 23 portant la pièce 24 est assemblé à la première plaque 11. Puis, le pavillon est soudé et brasé sur la caisse. Pendant le processus de passage en cataphorèse de la caisse, la pièce 24 subit une expansion et est vient en contact avec le pavillon au niveau de la deuxième plaque 12, puis durcit. Ensuite, le premier organe fileté 6 est fixé à la première plaque 11 : par exemple l'écrou à sertir est serti sur la première plaque 11. Le deuxième organe fileté 17, avec interposition éventuelle de la rondelle anticorrosion 22, est vissé au couple dans l'écrou serti jusqu'au contact avec la deuxième plaque 12. La pièce 24 apporte de la rigidité au pavillon et il n'y a pas de déformation provoqué par le serrage du deuxième organe fileté 17. La rondelle 22 vient garantir une fonction d'anticorrosion entre le pavillon et le deuxième organe fileté 17. Puis la barre de toit est mise en position, la vis 19 passant dans le deuxième organe fileté 17. La pièce 24 expansée permet d'assurer une contre-réaction de la poussée de la rondelle d'étanchéité 21 due à sa compression, assurant le cahier des charges relatif à l'étanchéité à l'eau et respectant la demande en terme de qualité perçue en s'affranchissant de risque de déformation du pavillon. Enfin, l'écrou 20 est vissé sur la vis 19 de fixation de la barre de toit.

Avantageusement, la solution précédemment décrite permet de s'affranchir de la nécessité de protéger les extrémités des vis 19 susceptibles de provoquer des rayures sur le pavillon lors du montage, car la tête d'appui 171 du deuxième organe fileté 17 protège localement le pavillon.

La fourniture du dispositif de serrage et de rattrapage de jeux permet de compenser la diversité d'épaisseur et de positionnement du pavillon, en particulier suivant sa matière (aluminium, acier,...). Elle permet de s'adapter à tous les véhicules indépendamment du modèle et il n'est pas besoin de prévoir une entretoise spécifique à chaque pavillon et à chaque modèle.

Avantageusement, la vis 19 et l'écrou 20 assurent une fonction d'anti-desserrage par une mise en compression du dispositif de serrage et de rattrapage de jeux préalablement vissé.

Un avantage particulier de rendre solidaire l'écrou serti sur la première plaque 11 disposée du coté de la caisse, c'est-à-dire du côté opposé au pavillon, est que lors du serrage de l'écrou 20, l'ensemble de l'empilage ne se desserre pas.

Avantageusement, le dispositif de serrage et de rattrapage de jeu pourra être fourni en kit, ce qui permet de dissocier les phases de montage.

## Revendications

1. Agencement (10) pour véhicule automobile, comprenant une première plaque (11) d'un premier élément de structure de la caisse du véhicule, notamment un renfort de montant de baie, et une deuxième plaque (12) d'un deuxième élément de structure de la caisse du véhicule, notamment un pavillon soudé au reste de la caisse, **caractérisé en ce qu'**il comprend un dispositif de serrage et de rattrapage de jeu entre les première et deuxième plaques (11, 12), constitué par un premier organe fileté (16) notamment de type femelle monté solidaire de la première plaque (11) et par un deuxième organe fileté (17) notamment de type mâle vissé dans ledit premier organe fileté (16), les première et deuxième plaques (11, 12) étant maintenues par le dispositif de serrage à distance l'une de l'autre suivant la direction de vissage (D) des premier et deuxième organes filetés (16, 17) entre eux de sorte à délimiter entre elles un intervalle (E) dans lequel sont disposés les premier et deuxième organes filetés (16, 17), **caractérisé en ce que** ledit deuxième organe fileté (17) est muni d'une tête d'appui (171) exerçant sur la deuxième plaque (12) un premier effort (F1) tendant à rapprocher la deuxième plaque (12) de la première plaque (11) suivant ladite direction de vissage (D) de sorte que la valeur dudit intervalle (E) et l'intensité dudit premier effort (F1) sont ajustées en fonction de la position relative des premier et deuxième organes filetés (16, 17), le première organe fileté (16) étant constitué par un écrou serti ou soudé à la première plaque (11) ou par un écrou-cage fixé à la première plaque (11).

2. Agencement (10) selon la revendication 1, **caractérisé en ce qu'**il comprend un objet (18) à fixer sur la deuxième plaque (12) du côté opposé à la première plaque (11), notamment une barre de toit, et un dispositif de fixation enserrant ledit objet (18), les première et deuxième plaques (11, 12) et le dispositif de serrage de sorte à exercer un deuxième effort (F2) sur ledit objet (18) en direction de la deuxième plaque (12), le dispositif de serrage permettant que la valeur de l'intervalle (E) soit constante indépendamment de l'intensité dudit deuxième effort (F2).

3. Agencement (10) selon la revendication 2, **caractérisé en ce que** le dispositif de fixation comprend un boulon ayant un écrou (20) et une vis (19) dont la position relative modifiée par vissage de l'écrou (20) par rapport à la vis (19) ajuste l'intensité dudit deuxième effort (F2) et **en ce que** les premier et deuxième organes filetés (16, 17) comprennent respectivement des premier et deuxième passages autorisant au moins une partie dudit boulon à traverser le dispositif de serrage suivant ladite direction de vissage (D).

4. Agencement (10) selon la revendication 3, **caractérisé en ce que** la vis (19) comprend une tête (191) exerçant ledit deuxième effort (F2) sur l'objet (18) à fixer et **en ce que** l'écrou (20) est disposé du côté opposé à la deuxième plaque (12) par rapport à la première plaque (11) et exerce sur le premier organe fileté (16) un troisième effort (F3) opposé audit deuxième effort (F2).

5. Agencement (10) selon l'une des revendications 3 ou 4, **caractérisé en ce que** le deuxième passage délimité par le deuxième organe fileté (17) est un alésage cylindrique dirigé suivant ladite direction de vissage (D), de sorte que le deuxième organe fileté (17) présente une forme générale de fût à l'extrémité duquel la tête d'appui (171) est formée par une collerette radiale en saillie du reste du fût.

6. Agencement (10) selon l'une des revendications 2 à 5, **caractérisé en ce que** le deuxième élément de structure de caisse est un pavillon du véhicule automobile, notamment soudé et brasé au reste de la caisse, et **en ce que** l'objet (18) à fixer est une barre de toit.

7. Agencement (10) selon l'une des revendications 1 à 6, **caractérisé en ce qu'**il comprend un moyen d'entretoisement (23, 24) entre les première et deuxième plaques (11, 12), disposé dans ledit intervalle (E), et exerçant sur la deuxième plaque (12) un quatrième effort (F4) opposé au premier effort (F1) exercé par la tête d'appui (171) du deuxième organe fileté (17) sur la deuxième plaque (12).

8. Agencement (10) selon la revendication 7, **caractérisé en ce que** le moyen d'entretoisement (23, 24) comprend un pontet (23) fixé sur une face de la première plaque (11) tournée vers la deuxième plaque (12) et une pièce (24) formée dans un matériau expansif par apport de chaleur, notamment durant une opération de cataphorèse appliquée aux premier et deuxième éléments de structure, ladite pièce (24) étant disposée entre le pontet (23) et la deuxième plaque (12) et étant en contact contre la deuxième plaque (12).

9. Agencement (10) selon l'une des revendications 1 à 8, **caractérisé en ce que** la tête d'appui (171) du deuxième organe fileté (17) est disposée du côté opposé à la première plaque (11) par rapport à la deuxième plaque (12) suivant ladite direction de vissage (D).

10. Véhicule automobile comprenant au moins un agencement (10) selon l'une quelconque des revendications précédentes.

## Patentansprüche

1. Anordnung (10) für ein Kraftfahrzeug, welche eine erste Platte (11) eines ersten Strukturelements der Karosserie des Fahrzeugs, insbesondere einer Fenstersäulenverstärkung, und eine zweite Platte (12) eines zweiten Strukturelements der Karosserie des Fahrzeugs, insbesondere eines an den Rest der Karosserie angeschweißten Karosserieoberteils, umfasst, **dadurch gekennzeichnet, dass** sie eine Vorrichtung zum Spannen und zum Ausgleich des Spiels zwischen der ersten und der zweiten Platte (11, 12) umfasst, die aus einem ersten mit einem Gewinde versehenen Element (16), insbesondere vom Buchsentyp, das fest an der ersten Platte (11) angebracht ist, und aus einem zweiten mit einem Gewinde versehenen Element (17), insbesondere vom Einstecktyp, das in das erste mit einem Gewinde versehene Element (16) eingeschraubt ist, besteht, wobei die erste und die zweite Platte (11, 12) durch die Spannvorrichtung in einem Abstand voneinander entlang der Richtung der Verschraubung (D) des ersten und zweiten mit einem Gewinde versehene Elements (16, 17) miteinander gehalten werden, derart, dass zwischen ihnen ein Zwischenraum (E) begrenzt wird, in welchem das erste und zweite mit einem Gewinde versehene Element (16, 17) angeordnet sind, **dadurch gekennzeichnet, dass** das zweite mit einem Gewinde versehene Element (17) mit einem Stützkopf (171) ausgestattet ist, der auf die zweite Platte (12) eine erste Kraft (F1) ausübt, die bestrebt ist, die zweite Platte (12) an die erste Platte (11) entlang der Verschraubungsrichtung (D) anzunähern, derart, dass die Größe des Zwischenraums (E) und die Stärke der ersten Kraft (F1) in Abhängigkeit von der relativen Position des ersten und des zweiten mit einem Gewinde versehene Elements (16, 17) angepasst werden, wobei das erste mit einem Gewinde versehene Element (16) aus einer Mutter, die in die erste Platte (11) eingepresst oder an sie angeschweißt ist, oder aus einem Mutterkäfig, der an der ersten Platte (11) befestigt ist, besteht.

2. Anordnung (10) nach Anspruch 1, **dadurch gekennzeichnet, dass** sie ein Objekt (18) umfasst, das an der zweiten Platte (12) auf der zur ersten Platte (11) entgegengesetzten Seite zu befestigen ist, insbesondere eine Dachreling, sowie eine Befestigungsvorrichtung, die das Objekt (18), die erste und die zweite Platte (11, 12) und die Spannvorrichtung umschließt, derart, dass eine zweite Kraft (F2) auf das Objekt (18) in Richtung der zweiten Platte (12) ausgeübt wird, wobei die Spannvorrichtung ermöglicht, dass die Größe des Zwischenraums (E) unabhängig von der Stärke der zweiten Kraft (F2) konstant ist.

3. Anordnung (10) nach Anspruch 2, **dadurch gekennzeichnet, dass** die Befestigungsvorrichtung einen Schraubenbolzen mit Mutter umfasst, der eine Mutter (20) und eine Schraube (19) aufweist, deren durch Drehen der Mutter (20) bezüglich der Schraube (19) veränderte relative Position die Stärke der zweiten Kraft (F2) verstellt, und dadurch, dass das erste und zweite mit einem Gewinde versehene Element (16, 17) einen ersten bzw. zweiten Durchgang umfassen, die ermöglichen, dass wenigstens ein Teil des Bolzens die Spannvorrichtung entlang der Richtung der Verschraubung (D) durchquert.

4. Anordnung (10) nach Anspruch 3, **dadurch gekennzeichnet, dass** die Schraube (19) einen Kopf (191) umfasst, der die zweite Kraft (F2) auf das zu befestigende Objekt (18) ausübt, und dadurch, dass die Mutter (20), bezogen auf die erste Platte (11), auf der zur zweiten Platte (12) entgegengesetzten Seite angeordnet ist und auf das erste mit einem Gewinde versehene Element (16) eine dritte Kraft (F3) ausübt, die zu der zweiten Kraft (F2) entgegengerichtet ist.

5. Anordnung (10) nach einem der Ansprüche 3 oder 4, **dadurch gekennzeichnet, dass** der zweite Durchgang, der von dem zweiten mit einem Gewinde versehenen Element (17) begrenzt wird, eine zylindrische Bohrung ist, die entlang der Richtung der Verschraubung (D) ausgerichtet ist, derart, dass das zweite mit einem Gewinde versehene Element (17) eine allgemeine Form eines Schaftes aufweist, an dessen Ende der Stützkopf (171) von einem radialen Flansch gebildet wird, der vom Rest des Schaftes aus vorsteht.

6. Anordnung (10) nach einem der Ansprüche 2 bis 5, **dadurch gekennzeichnet, dass** das zweite Karosseriestrukturelement ein Karosserieoberteil des Kraftfahrzeugs ist, das insbesondere an den Rest der Karosserie angeschweißt und angelötet ist, und dadurch, dass das zu befestigende Objekt (18) eine Dachreling ist.

7. Anordnung (10) nach einem der Ansprüche 1 bis 6, **dadurch gekennzeichnet, dass** sie ein Verstrebungsmittel (23, 24) zwischen der ersten und der zweiten Platte (11, 12) umfasst, das im Zwischenraum (E) angeordnet ist und auf die zweite Platte (12) eine vierte Kraft (F4) ausübt, die entgegengerichtet zu der ersten Kraft (F1) ist, die von dem Stützkopf (171) des zweiten mit einem Gewinde versehenen Elements (17) auf die zweite Platte (12) ausgeübt wird.

8. Anordnung (10) nach Anspruch 7, **dadurch gekennzeichnet, dass** das Verstrebungsmittel (23, 24) einen Steg (23) umfasst, der auf einer der zweiten Platte (12) zugewandten Seite der ersten Platte (11) befestigt ist, und ein Teil (24), das aus einem Material ausgebildet ist, welches sich durch Wärmezufuhr ausdehnt, insbesondere während eines Arbeitsgangs der Kataphorese, dem das erste und zweite Strukturelement unterzogen werden, wobei das Teil (24) zwischen dem Steg (23) und der zweiten Platte (12) angeordnet ist und mit der zweiten Platte (12) in Kontakt steht.

9. Anordnung (10) nach einem der Ansprüche 1 bis 8, **dadurch gekennzeichnet, dass** der Stützkopf (171) des zweiten mit einem Gewinde versehene Elements (17) entlang der Richtung der Verschraubung (D), bezogen auf die zweite Platte (12), auf der zu der ersten Platte (11) entgegengesetzten Seite angeordnet ist.

10. Kraftfahrzeug, welches wenigstens eine Anordnung (10) nach einem der vorhergehenden Ansprüche umfasst.

## Claims

1. Arrangement (10) for a motor vehicle comprising a first plate (11) of a first structural element of the vehicle body, in particular a window pillar reinforcement, and a second plate (12) of a second structural element of the vehicle body, in particular a roof welded onto the rest of the body, **characterized in that** it comprises a device for tightening and adjusting the play between the first and second plates (11, 12), made up of a first threaded member (16), in particular a female threaded member, rigidly connected to the first plate (11) and a second threaded member (17), in particular a male threaded member, screwed into said first threaded member (16), the tightening device keeping the first and second plates (11, 12) apart from one another in the screwing direction (D) of the first and second threaded members (16, 17) relative to one another so as to create a gap (E) between same in which the first and second threaded members (16, 17) are placed, **characterized in that** said second threaded member (17) is provided with a bearing head (171) exerting a first force (F1) on the second plate (12) tending to bring the second plate (12) closer to the first plate (11) in said screwing direction (D) such that the value of said gap (E) and the intensity of said first force (F1) are adjusted as a function of the relative position of the first and second threaded members (16, 17), the first threaded member comprising a nut tightened or welded to the first plate (11) or a cage nut attached to the first plate (11).

2. Arrangement (10) according to Claim 1, **characterized in that** it includes an object (18) designed to be attached to the second plate (12) on the side opposite the first plate (11), in particular a roof bar, and an attachment device clamping said object (18), the first and second plates (11, 12) and the tightening device such as to exert a second force (F2) on said object (18) towards the second plate (12), the tightening device enabling the value of the gap (E) to be kept constant regardless of the intensity of said second force (F2).

3. Arrangement (10) according to Claim 2, **characterized in that** the attachment device includes a bolt that has a nut (20) and a screw (19), the relative position of which, as adjusted by turning the nut (20) in relation to the screw (19), adjusts the intensity of said second force (F2), and **in that** the first and second threaded members (16, 17) include respectively first and second passages enabling at least a portion of said bolt to pass through the tightening device in said screwing direction (D).

4. Arrangement (10) according to Claim 3, **characterized in that** the screw (19) has a head (191) exerting said second force (F2) on the object (18) to be attached, and **in that** the nut (20) is positioned on the side opposite the second plate (12) in relation to the first plate (11) and exerts on the first threaded member (16) a third force (F3) opposing said second force (F2).

5. Arrangement (10) according to either of Claims 3 and 4, **characterized in that** the second passage delimited by the second threaded member (17) is a cylindrical bore oriented in said screwing direction (D), such that the overall shape of the second threaded member (17) is a shaft at the extremity of which the bearing head (171) is formed by a radial flange projecting from the rest of the shaft.

6. Arrangement (10) according to one of Claims 2 to 5, **characterized in that** the second structural element of the body is a roof of the motor vehicle, in particular welded and brazed to the rest of the body, and **in that** the object (18) to be attached is a roof bar.

7. Arrangement (10) according to one of Claims 1 to 6, **characterized in that** it includes a spacer (23, 24) between the first and second plates (11, 12), positioned in said gap (E) and exerting on the second plate (12) a fourth force (F4) opposing the first force (F1) exerted by the bearing head (171) of the second threaded member (17) on the second plate (12).

8. Arrangement (10) according to Claim 7, **characterized in that** the spacer (23, 24) includes a bracket (23) attached to a face of the first plate (11) oriented towards the second plate (12) and a part (24) made of a material that expands with the application of heat, in particular during an electrophoretic deposition operation applied to the first and second structural elements, said part (24) being arranged between the bracket (23) and the second plate (12) and bearing against the second plate (12).

9. Arrangement (10) according to one of Claims 1 to 8, **characterized in that** the bearing head (171) of the second threaded member (17) is arranged on the side opposite the first plate (11) in relation to the second plate (12) in said screwing direction (D).

10. Motor vehicle having at least one arrangement (10) according to any one of the preceding claims.
